# EUROPÄISCHE PATENTSCHRIFT

(11) **EP 3 158 851 B1**
(45) Veröffentlichungstag und Bekanntmachung des Hinweises auf die Patenterteilung: **29.05.2019**
(21) Anmeldenummer: 16194067.1
(22) Anmeldetag: 17.10.2016
(51) Int. Cl.: A01D 61/00, B65G 15/52

(54) **NOCKENRIEMEN, INSBESONDERE FÜR LANDWIRTSCHAFTLICHE MASCHINEN**
TOOTHED BELT, IN PARTICULAR FOR AGRICULTURAL MACHINES
COURROIE CRANTÉE, EN PARTICULIER POUR MACHINES AGRICOLES

(30) Priorität: 23.10.2015 DE 102015118143
(43) Veröffentlichungstag der Anmeldung: 26.04.2017
(73) Patentinhaber: Arnold Jäger Holding GmbH, 30625 Hannover (DE)
(72) Erfinder: Jäger, Sebastian, 30657 Hannover (DE); Schmidt, Nick, 31275 Lehrte/Immensen (DE)
(74) Vertreter: Bremer, Ulrich

(56) Entgegenhaltungen:
- DE-A1-102009 036 104
- DE-B3-102007 049 839

## Beschreibung

Die vorliegende Erfindung betrifft einen Nockenriemen, insbesondere für landwirtschaftliche Maschinen, gemäß dem Oberbegriff des Anspruchs 1.

Förderbänder, die Nockenriemen als Zugmittel aufweisen, kommen insbesondere in der Landwirtschaft vielfach zur Anwendung. Derartige Förderbänder weisen meist zwei oder mehrere parallel zueinander verlaufende Nockenriemen auf, die durch Funktionselemente, zum Beispiel Mitnehmer, miteinander verbunden sind. Die Nockenriemen besitzen auf ihrer Innenseite gleichmäßig voneinander beabstandete, durch Lücken getrennte Nocken und laufen jeweils um ein angetriebenes Nockenrad und ein mitgenommenes Nockenrad um. Die Nockenräder haben auf ihrem Umfang Mitnahmemittel, die einen Abstand voneinander aufweisen, der der Teilung der Nocken entspricht. Diese Mitnahmemittel greifen in die zwischen den Nocken vorhandenen Lücken der Nockenriemen ein, wodurch ein schlupffreier Antrieb möglich ist. Die Nockenriemen sind in aller Regel aus durch Gewebelagen verstärktem vernetztem Polymer hergestellt. Es sind auch andere Verstärkungseilagen bekannt wie zum Beispiel Kord oder Stahlseile.

In der DE 10 2007 049 839 B3 ist ein Stabband für Stabbandförderer beschrieben. Als Bänder sind zwei parallel zueinander angeordnete, umlaufende Nockenriemen vorgesehen, die durch quer zur Förderrichtung verlaufende Stäbe miteinander verbunden sind. Die Stäbe sind an ihren Enden abgeflacht und liegen mit diesen Enden von oben auf den Nockenriemen auf. Die Befestigung der Stäbe an den Nockenriemen erfolgt durch Vernietung. Dazu besitzen die Nockenriemen quer zur Förderrichtung zwei voneinander beabstandete, ausgestanzte Löcher. In den Stabenden sind im gleichen Abstand ebenfalls zwei Löcher vorgesehen. Zur Herstellung einer Nietverbindung zwischen den Stäben und den Nockenriemen werden die Stäbe auf die Nockenriemen so aufgelegt, dass deren Löcher miteinander fluchten. Dann werden von der Riemenunterseite her unter Zwischenfügung einer großflächigen Nietplatte Niete durch die fluchtenden Löcher der Stäbe und Nockenriemen hindurch gesteckt und ein Schließkopf hergestellt. Die Stäbe sind dann fest mit den Nockenriemen verbunden. Die großflächige Nietplatte verhindert ein Durchziehen der Niete durch den Nockenriemen bei der Herstellung der Nietverbindung bzw. unter Belastung im Betrieb.

Bei der oben beschriebenen Lösung liegen die Nietplatten auf dem Boden von zwischen den Nocken gebildeten Lücken mittig auf. Beim Umlauf des Nockenriemens um ein angetriebenes Nockenrad kommt es dann zu einem metallischen Kontakt zwischen den Außenflächen der Mitnahmemittel des Nockenrades und der Nietplatten. Das führt durch die in der Regel hohen Radialkräfte an den Umlenkstellen und die üblichen Fördergeschwindigkeiten von 0,5 bis 8 m/s und durch den mechanischen Kontakt in Verbindung mit abrasiven Stoffen, wie Erde, Schmutz und Erntegut, auf Dauer zu einem großen Verschleiß an den in Kontakt kommenden Flächen der Mitnahmemittel sowie der Nietplatten. Hierdurch verringert sich mit der Zeit der Teilkreisdurchmesser, wodurch immer größere Unterschiede zur Nockenteilung des Nockenriemens entstehen, was das Ineinanderkämmen des Systems negativ beeinflusst. Ferner kommt es zu deutlichen Laufgeräuschen durch den Kontakt zwischen den Mitnahmemitteln der Nockenräder und den Nietplatten. Ist der Verschleiß soweit fortgeschritten, dass der Nietkopf abgeschliffen ist, löst sich das Funktionselement vom Nockenriemen, was zum Versagen des gesamten Systems führt.

Diese Nachteile werden mit einem Nockenriemen vermieden, der in der DE 10 2009 036 104 A1 offenbart ist. In einem Ausführungsbeispiel sind Mitnehmerleisten durch Schraubverbindungen auf dem Nockenriemen festgelegt. Die Schraubverbindungen weisen Schraubenbolzen auf, die mittig in einen Nocken des Nockenriemens einvulkanisiert sind. Dabei sind die Köpfe der Schraubenbolzen in den Nocken eingebettet und ihre Gewindeschäfte durchragen jeweils ein Loch im Nockenriemen sowie ein Loch in den Mitnehmerleisten. Die Befestigung der Mitnehmerleisten auf den Nockenriemen erfolgt durch Aufschrauben einer Mutter auf den Gewindeschaft des Schraubenbolzens. Um die dabei auf den Kopf der Schraubenbolzens wirkende Zugkräfte ohne Beschädigung des Nockenriemens aufnehmen zu können, insbesondere um ein Durchziehen des Schraubenbolzens durch den Nockenriemen zu verhindern, liegt der Bolzenkopf an einem großflächigen Abstützelement in Form einer Ankerplatte an. Aus dieser Druckschrift ist auch bekannt, die Schraubenbolzen an die Ankerplatte anzuschweißen, wodurch auf Bolzenköpfe verzichtet werden kann.

Der beschriebene gattungsgemäße Nockenriemen arbeitet verschleiß- und geräuscharm, da die Befestigungsmittel in einen Nocken einvulkanisiert sind. Ein Nachteil besteht darin, dass das Einvulkanisieren der Befestigungsmittel relativ aufwendig ist.

In der US 4,697,693 ist ebenfalls ein gattungsgemäßer Nockenriemen beschrieben. Zur Befestigung eines Funktionselements, z. B. einer Mitnehmerleiste, am Nockenriemen, ist mittig in einen Nocken ein Durchgangsloch eingebracht, durch das ein Schraubenbolzen hindurch gesteckt wird. Die Befestigung der Mitnehmerleisten auf den Nockenriemen erfolgt durch Aufschrauben einer Mutter auf den Gewindeschaft des Schraubenbolzens. Auch hier liegt der Kopf des Schraubenbolzens an einer Ankerplatte an, um ein Durchziehen des Schraubenbolzens durch den Nockenriemen zu verhindern. Damit der Kopf des Schraubenbolzens und die Ankerplatte in der Höhe nicht über die Kontur eines üblichen Nockens hinaus ragen, ist der Nocken entsprechend in seiner Höhe verringert. Auch die radialen Erstreckungen der Ankerplatte und des Kopfes des Schraubenbolzens sind so gewählt, das sie innerhalb der Kontur eines üblichen Nockens liegen. Bei dieser Lösung erspart man sich das Einvulkanisieren der Befestigungsmittel in den Nocken. Allerdings wird auch hier ein metallischer Kontakt zwischen den Antriebsmitteln und den Befestigungsmitteln nicht vermieden.

Aufgabe der vorliegenden Erfindung ist es daher, einen gattungsgemäßen Nockenriemen zur Verfügung zu stellen, der bei einfacher Montage der Befestigungsmittel verschleiß- und geräuscharm ist.

Diese Aufgabe wird erfindungsgemäß mit einem Nockenriemen gelöst, der die Merkmale des Anspruchs 1 aufweist.

Die vorliegende Erfindung macht sich die Erkenntnis zunutze, dass im Eckbereich zwischen dem Boden einer Lücke und der in Laufrichtung weisenden Flanke eines angrenzenden Nockens in aller Regel Raum vorhanden ist, der nicht von den in die Lücke eingreifenden Mitnahmemitteln eines Nockenrades tangiert wird. Dieser Raum wird dazu genutzt, dort die Befestigungsmittel, zum Beispiel Schrauben oder Niete, für Funktionselemente anzuordnen. Da durch diese Lösung ein Kontakt der Befestigungsmittel mit den Mitnahmemitteln der Nockenräder des Förderers vermieden wird, erfolgt ein verschleiß- und geräuscharmer Antrieb des Nockenriemens bei einfacher Montage der Befestigungsmittel. Sollte bei kleinen Teilungen der Raum im Eckbereich nicht ausreichen, so kann in einfacher Weise Abhilfe dadurch geschaffen werden, dass die in Laufrichtung weisende Flanke zur Vergrößerung der Lücke entgegen der Laufrichtung versetzt wird, wodurch wieder mehr Raum für die Anordnung eines Befestigungsmittels im Eckbereich zur Verfügung steht.

Bei dem Befestigungsmittel handelt es sich in vorteilhafter Ausgestaltung der Erfindung um einen einstückig ausgeführten U-förmigen Bügel aus Rundstahl. Es besitzt eine Basis, die im Einbauzustand ein Abstützelement des Befestigungsmittels am Nockenriemen bildet. Von der Basis ragen voneinander beabstandet zwei mit einem Gewinde versehene Schenkel senkrecht ab. Dieses Befestigungsmittel ist einfach und kostengünstig herstellbar und hat zudem den Vorteil, dass es, bezogen auf seine Einbaulage, in Riemenlängsrichtung schmal baut und somit wenig Platz im Eckbereich beansprucht.

Weitere vorteilhafte Ausgestaltungen der Erfindung ergeben sich aus den übrigen Unteransprüchen.

Die Erfindung wird nachstehend anhand von Ausführungsbeispielen näher erläutert. In der dazugehörigen Zeichnung zeigt:
- Fig. 1: einen perspektivischen Blick von schräg oben auf einen Schrägförderer eines Mähdreschers,
- Fig. 2: eine perspektivische Darstellung eines Befestigungsmittels für die Anbringung von Funktionselementen auf den Nockenriemen des Schrägförderers im vergrößerten Maßstab,
- Fig. 3: eine perspektivische Darstellung eines Abschnitts eines Nockenriemens nach einer ersten Ausführungsform mit einem zur Anordnung der Befestigungsmittel vorgesehenen Nocken,
- Fig. 4: einen Blick in Richtung des Pfeils A gemäß Figur 1 auf ein angetriebenes Nockenrad des Schrägförderers mit einem Abschnitt des um dieses Nockenrad umlaufenden Nockenriemens gemäß der ersten Ausführungsform,
- Fig. 5: eine Darstellung gemäß Fig. 4 mit einem Nockenriemen in einer zweiten Ausführungsform,
- Fig.6: eine perspektivische Darstellung einer in der Ausführungsform gemäß Fig. 5 zur Anwendung kommenden Winkelplatte, und
- Fig. 7: eine Darstellung gemäß Fig. 4 mit einem Nockenriemen in einer dritten nicht zur Erfindung gehörenden Ausführungsform.

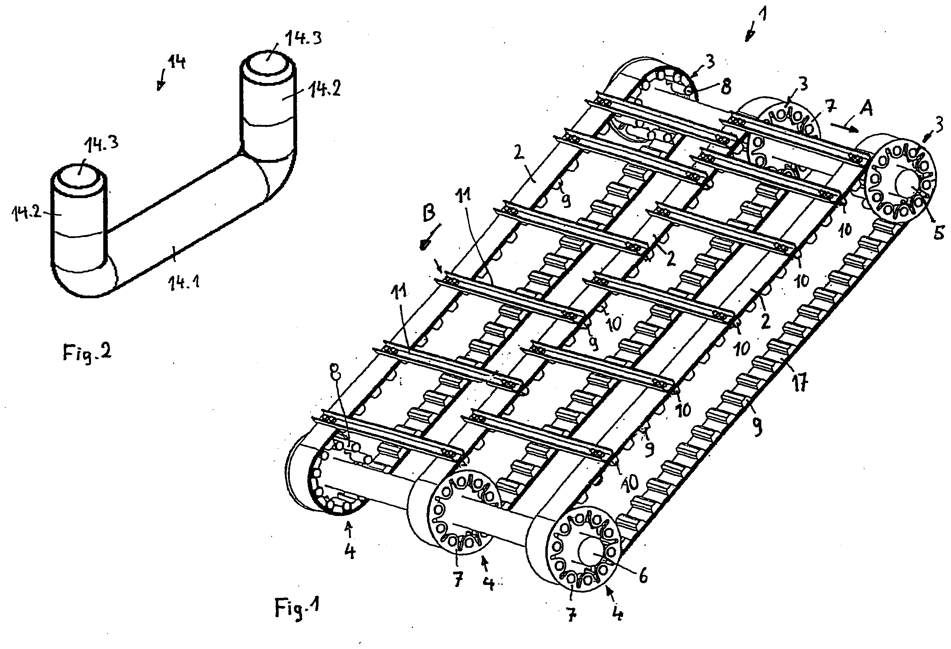

Figur 1 zeigt einen Schrägförderer 1 für einen Mähdrescher, der drei parallel zueinander verlaufende Nockenriemen 2 aufweist. Er fördert Erntegut unterschächtig einer nicht dargestellten Drescheinheit des Mähdreschers zu. Die Nockenriemen 2 werden über obere Nockenräder 3 und untere Nockenräder 4, die in diesem Ausführungsbeispiel als Schweißkonstruktionen ausgeführt sind, umgelenkt. Anstelle einer Schweißkonstruktion ist auch eine Gusskonstruktion möglich. Die oberen Nockenräder 3 sitzen auf einer angetriebenen Welle 5, während die auf einer Welle 6 sitzenden unteren Nockenräder 4 durch die angetriebenen Nockenriemen 2 mitgenommen werden. Die Nockenräder 3 und 4 weisen eine drehfest mit den Wellen 5 und 6 verbundene Nabenscheiben 7 auf, an deren Umfang Mitnahmemittel in Form von zylindrischen Bolzen 8 lotrecht abragend angeschweißt sind.

Die Nockenriemen 2 weisen in einer ersten Ausführungsform der Erfindung zwei Arten von Nocken auf; zum einen Nocken 9, die ausschließlich dem Antrieb der Nockenriemen 2 dienen, und zum anderen Nocken 10, die zusätzlich der Befestigung von Mitnehmerleisten 11 an den Nockenriemen 2 dienen. Die Nocken 9 haben den Querschnitt eines gleichschenkligen Trapezes und besitzen, bezogen auf die Laufrichtung der Nockenriemen 2, die in den Figuren durch einen Pfeil B gekennzeichnet ist, eine in Laufrichtung weisende Flanke 12 und eine in die entgegengesetzte Richtung weisende Flanke 13. Benachbarte Nocken 9 sind durch Lücken 17 in einer vorgegebenen Teilung voneinander beabstandet, wobei die Lücken 17 durch die Flanken 12 und 13 und einen die beiden Flanken 12, 13 verbindenden Boden 18 begrenzt sind.

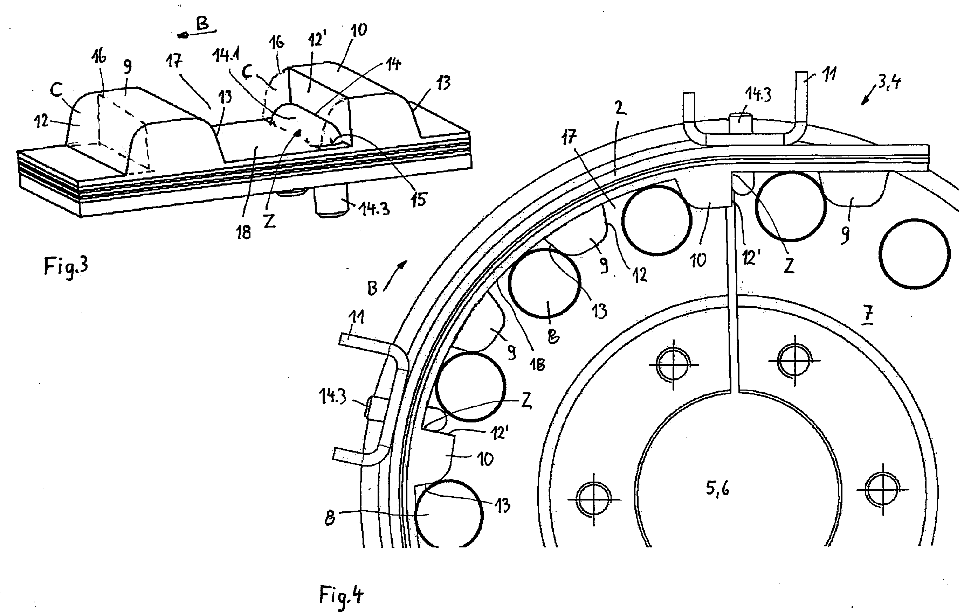

Die Nocken 10 unterscheiden sich von den Nocken 9 dadurch, dass bei ihnen, bezogen auf die Form der Nocken 9, ein Vorderbereich C fehlt, das heißt, die in Laufrichtung (Pfeil B) weisende Flanke 12'eines Nockens 10 ist gegenüber der Flanke 12 eines Nockens 9 bezogen auf die Laufrichtung (Pfeil B) des Nockenriemens 2 rückversetzt. Diese Ausbildung geht am besten aus der Darstellung gemäß Figur 3 hervor, in der der besagte Vorderbereich C durch gestrichelt gezeichnete Linien 16 bei den Nocken 9 und 10 kenntlich gemacht ist. Zudem ragt die Flanke 12' senkrecht von der Unterseite des Nockenriemens 2 ab. Die Herstellung eines Nockens 10 kann entweder durch einen entsprechenden mechanischen Abtrag eines Nockens 9 oder durch Formgebung beim Vulkanisieren erfolgen.

Durch die Rückversetzung der in Laufrichtung (Pfeil B) weisenden Flanke 12' eines Nockens 10 wird im Eckbereich Z zwischen der Flanke 12' und dem Boden 18 der Lücke 17 Raum geschaffen für die Anordnung eines Befestigungsmittels 14, welches in Figur 2 dargestellt ist, ohne mehr Platz zu beanspruchen als ein Nocken 9. Bei dem Befestigungsmittel 14 handelt es sich um einen einstückig ausgeführten U-förmigen Bügel aus Rundstahl. Es besitzt eine Basis 14.1, die im Einbauzustand ein Abstützelement des Befestigungsmittels 14 am Nockenriemen 2 bildet. Von der Basis 14.1 ragen voneinander beabstandet zwei mit einem Gewinde 14.2 versehene Schenkel 14.3 senkrecht ab.

Zur Montage des Befestigungsmittels 14 am Nockenriemen 2 sind im Eckbereich Z zwei Durchgangslöcher 15 angeordnet, die den Abstand der Schenkel 14.3 des Befestigungsmittels 14 voneinander haben. Bei der Montage wird das Befestigungsmittel 14 von unten durch die Durchgangslöcher 15 hindurch gesteckt, so dass die Schenkel 14.3 auf der Außenseite aus dem Nockenriemen 2 herausragen, wie aus der Darstellung gemäß der Figuren 3 und 4 hervorgeht. Anschließend werden die Mitnehmerleisten 11 an ihren Enden auf die hervorstehenden Schenkel 14.3 des Befestigungsmittels 14 aufgeschoben, wozu sie mit entsprechenden Durchgangslöchern versehen sind. Zur Herstellung einer Schraubverbindung werden dann nicht dargestellte Muttern auf das Gewinde 14.2 der Schenkel 14.3 aufgeschraubt und festgezogen. Dadurch wird die Basis 14.1 des Befestigungsmittels 14 unter Vergrößerung ihrer Abstützfläche etwas in den Nockenriemen 2 eingezogen, wie in Figur 3 dargestellt ist.

Die Bolzen 8 der Nockenräder 3 und 4 haben einen Abstand voneinander, der der Teilung der Nocken 9, 10 der Nockenriemen 2 entspricht. Die Bolzen 8 greifen daher schlupffrei in die zwischen den Nocken 9 bzw. den Nocken 9 und 10 gebildeten Lücken 17 der Nockenriemen 2 ein.

Aufgrund der beschriebenen Lage der Befestigungsmittel 14 wird beim Umlauf der Nockenriemen 2 um die Nockenräder 3 und 4 ein Kontakt zwischen den Metallteilen, Bolzen 8 der Nockenräder 3 und 4 und Befestigungsmittel 14, vermieden, wie in Figur 4 dargestellt ist. Die Nockenriemen 2 laufen daher sehr geräusch- und verschleißarm.

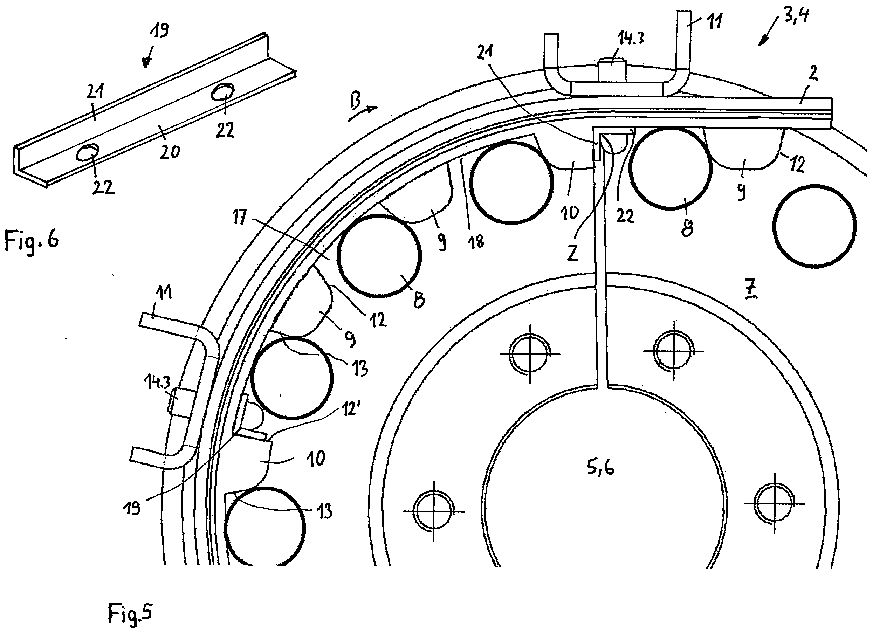

Das oben beschriebene Ausführungsbeispiel kommt bevorzugt bei Nockenriemen 2 mit kleiner Teilung zur Anwendung. Das gilt auch für das zweite Ausführungsbeispiel gemäß den Figuren 5 und 6. Dieses Ausführungsbeispiel unterscheidet sich von dem oben beschriebenen Ausführungsbeispiel dadurch, dass das Befestigungsmittel 14 unter Zwischenfügung einer Winkelplatte 19, die in Figur 6 dargestellt ist, montiert wird.

Die Winkelplatte 19 ist aus Stahlblech gefertigt und besitzt eine erste Wange 20 und eine zweite Wange 21, die einen rechten Winkel zwischen sich einschließen. Die Länge der Winkelplatte 19 entspricht im Wesentlichen der Breite des Nockenriemens 2. Im montierten Zustand ist die Winkelplatte 19 im Eckbereich Z angeordnet, wobei sich die Wange 20 am Boden 18 einer Lücke 17 und die Wange 21 sich an der lotrechten Flanke 12' eines angrenzenden Nockens 10 abstützt, wie aus Figur 5 hervorgeht.

Die Wange 20 ist mit zwei Durchgangslöchern 22 versehen, die den gleichen Abstand voneinander haben wie die beiden Schenkel 14.3 des Befestigungsmittels 14. Zur Montage wird die Winkelplatte 19 im Eckbereich Z so angeordnet, dass ihre Durchgangslöcher 22 mit den Durchgangslöchern 15 im Nockenriemen 2 fluchten. Bei der Montage wird das Befestigungsmittel 14 von unten durch die fluchtenden Durchgangslöcher 22 und 15 hindurch gesteckt, so dass die Schenkel 14.3 auf der Außenseite aus dem Nockenriemen 2 herausragen, wie aus Figur 5 hervorgeht. Anschließend werden die Mitnehmerleisten 11an ihren Enden auf die hervorstehenden Schenkel 14.3 des Befestigungsmittels 14 aufgeschoben, wozu sie mit entsprechenden Durchgangslöchern versehen sind. Zur Herstellung einer Schraubverbindung werden dann nicht dargestellte Muttern auf das Gewinde 14.2 der Schenkel 14.3 aufgeschraubt und festgezogen.

Die Winkelplatte 19 besitzt aufgrund ihrer Form eine große Steifigkeit. Dadurch kann die auf dem Boden 18 einer Lücke 17 aufliegende Wange 20 recht schmal ausgeführt werden, was dem Raumangebot im Eckbereich Z entgegenkommt. Im Prinzip braucht die Wange 20 nicht breiter zu sein als der Durchmesser des Befestigungsmittels 14, d.h., die Durchgangslöcher 22 können sich sogar in den Randbereich der Wange 20 öffnen.

Die Winkelplatte 19 erhöht den Widerstand gegen ein Durchziehen des Befestigungsmittels 14 durch den Nockenriemen 2 bei der Montage und im Betrieb. Ein weiterer Vorteil ist darin zu sehen, dass die Wange 21 den durch die Kürzung etwas geschwächten Nocken 10 abstützt und somit stabilisiert.

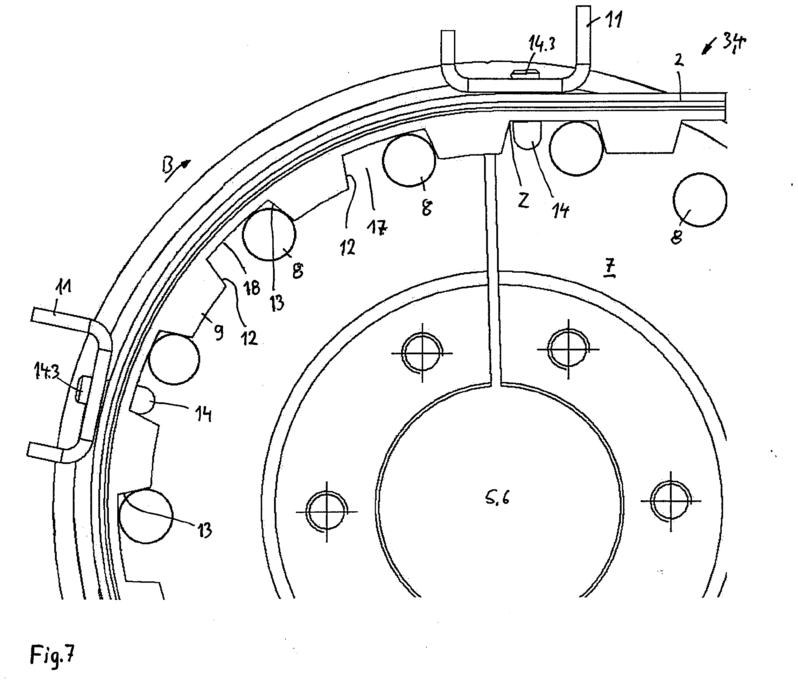

Figur 7 zeigt ein weiteres Ausführungsbeispiel, welches einen Nockenriemen 2 mit großer Teilung betrifft. Auch hier kommt ein Befestigungsmittel 14, wie oben schon beschrieben, zum Einsatz., welches im Eckbereich Z zwischen dem Boden 18 einer Lücke 17 und einer in Laufrichtung (Pfeil B) weisenden Flanke 12 eines angrenzenden Nockens 9 angeordnet ist. Da aufgrund der großen Teilung im Eckbereich Z ausreichend Platz für die Anordnung des Befestigungsmittels 14 zur Verfügung steht, ist eine Kürzung, der Nocken 9 nicht erforderlich. Auch bei dieser Ausführungsform können Winkelplatten 19, wie oben beschrieben zum Einsatz kommen, wobei der Winkel zwischen den beiden Wangen 20 und 21 dem Anstellwinkel der Flanke 12 entspricht, so dass die Wange 21 im montierten Zustand an der Flanke 12 anliegt.

## Patentansprüche

1. Nockenriemen, insbesondere für landwirtschaftliche Maschinen, hergestellt aus einem mit Verstärkungseinlagen versehenen Polymer, mit auf der Riemeninnenseite angeordneten Nocken (9, 10), die dem Antrieb des Nockenriemens (2) dienen und eine erste, in Laufrichtung (Pfeil B) des Nockenriemens (2) weisende Flanke (12, 12') und eine zweite, in die entgegengesetzte Richtung weisende Flanke (13) aufweisen, wobei die Nocken (9, 10) durch Lücken (17) in einer vorgegebenen Teilung voneinander beabstandet sind, und die Lücken (17) jeweils durch die erste Flanke (12, 12') und die zweite Flanke (13) von zwei benachbarten Nocken (9; 9,10) und einem die beiden Flanken (12, 12', 13) verbindenden Boden (18) begrenzt sind, und im Betrieb des Nockenriemens (2) die Mitnahmemittel (8) eines Nockenrades (3, 4), an der zweiten Flanke (13) der Nocken (9, 10) und am Boden (18) einer Lücke (17) anliegend in die Lücken (17) eingreifen, wobei auf der Riemenaußenseite Funktionselemente (11) durch ein Befestigungsmittel (14) festgelegt sind, welches den Nockenriemen (2) und die Funktionselemente (11) über mindestens ein Durchgangsloch (15) von der Riemeninnenseite her durchsetzt, **dadurch gekennzeichnet, dass** bei den Nocken (10) die zusätzlich der Befestigung der Funktionselemente (11) dienen, wobei diese jeweils im Eckbereich (Z) zwischen der ersten Flanke (12,12') dieser Nocken (10) und dem Boden (18) der Lücken (17) angeordnet sind, die erste Flanke (12') bei kleiner Teilung zur Vergrößerung der Lücke (17) im Vergleich mit der Flanke (12) der anderen Nocken (9) entgegen der Laufrichtung (Pfeil B) versetzt ist.

2. Nockenriemen nach Anspruch 1, **dadurch gekennzeichnet, dass** das Befestigungsmittel (18) unter Zwischenfügung einer Winkelplatte (19) im Eckbereich (Z) montiert ist, welche eine erste Wange (20), die sich am Boden (18) einer Lücke (17) abstützt, und eine zweite Wange (21), die sich an der ersten Flanke (12, 12') abstützt, aufweist.

3. Nockenriemen nach Anspruch 1 oder 2, **dadurch gekennzeichnet, dass** das Befestigungsmittel (14) als einstückiger U-förmiger Bügel aus Rundstahl ausgeführt ist, mit einer ein Abstützelement bildenden Basis (14.1), von der zwei mit einem Gewinde (14.2) versehene Schenkel (14.3) senkrecht abragen, die bei der Montage durch in den Nockenriemen (2) eingebrachte Durchgangslöcher (15) hindurch gesteckt werden.

## Claims

1. Cam belt, in particular for agricultural machines, made of a polymer provided with reinforcing inserts, with cams (9, 10) arranged on the inside of the belt serving to drive the cam belt (2) and having a first flank (12, 12'), pointing in the running direction (arrow B) of the cam belt (2), and a second flank (13) pointing in the opposite direction, wherein the cams (9, 10) are spaced apart from each other by gaps (17) at a predetermined spacing, and the gaps (17) are bounded respectively by the first flank (12, 12') and the second flank (13) of two adjacent cams (9; 9, 10) and a base (18) connecting the two flanks (12, 12', 13), and during the operation of the cam belt (2) the driving means (8) of a cam wheel (3, 4), adjacent to the second flank (13) of the cams (9, 10) and to the base (18) of a gap (17), engages in the gaps (17), wherein functional elements (11) are fixed on the outside of the belt by a fastening means (14), which passes through the cam belt (2) and the functional elements (11) via at least one through hole (15) from the inside of the belt, **characterised in that** the two cams (10) additionally serve to attach the functional elements (11), wherein these are arranged respectively in the corner region (Z) between the first flank (12, 12') of these cams (10) and the base (18) of the gaps (17), the first flank (12') being offset in comparison with the flank (12) of the other cam (9) in respect to the running direction (arrow B) by a small spacing for enlarging the gap (17).

2. Cam belt according to Claim 1, **characterised in that** the fastening means (18) is mounted with the interposition of an angle plate (19) in the corner region (Z), which has a first side member (20) supported on the base (18) of a gap (17), and a second side member (21) supported on the first flank (12, 12').

3. Cam belt according to Claim 1 or 2, **characterised in that** the fastening means (14) is designed as a monobloc U-shaped bracket made of round steel, with a support element forming a base (14.1), from which two legs (14.3) provided with a thread (14.2) protrude vertically, which, during assembly, are inserted into through holes (15) incorporated into the cam belt (2).

## Revendications

1. Courroie à crans, en particulier pour machines agricoles, fabriquée en un polymère pourvu d'une garniture de renforcement, avec des crans (9, 10) disposés sur la face intérieure de la courroie qui servent à l'entraînement de la courroie à crans (2) et un premier flanc (12, 12') orienté dans le sens de déplacement (flèche) de la courroie crantée (2) et un second flanc (13) orienté dans le sens opposé, les crans (9, 10) étant écartés les uns par rapport aux autres par des vides (17) selon une division prédéfinie, et les vides (17) étant délimités respectivement par le premier flanc (12, 12') et le second flanc (13) de deux crans voisins (9,9,10) et un fond reliant les deux flancs (12, 12', 13), et, en fonctionnement de la courroie à crans (2), les moyens d'entraînement (8) d'une roue à crans (3, 4), adjacents au second flanc (13) des crans (9, 10) et au fond (18) d'un vide (17), prennent dans les vides (17), des éléments fonctionnels (11) étant fixés sur la face extérieure de la courroie par un moyen de fixation (14), qui pénètre la courroie à crans (2) et les éléments fonctionnels via au moins un trou traversant (15) depuis la face intérieure de la courroie, **caractérisée en ce qu'**au niveau des crans (10), qui servent, en plus, à la fixation des éléments fonctionnels (11), lesquels sont respectivement disposés dans la zone d'angle (Z) entre le premier flanc (12, 12') de ces crans (10) et le fond (18) des vides (17), le premier flanc (12') est, à petite division pour agrandir le vide (17), décalé dans le sens opposé (flèche B) comparé au flanc (12) des autres crans (9).

2. Courroie à crans suivant la revendication 1, **caractérisée en ce que** le moyen de fixation (18) est monté, avec insertion dans la zone d'angle (Z) d'une cornière (19) qui présente une première joue (20) s'appuyant sur le fond (18) d'un vide (17) et une seconde joue (21) s'appuyant sur le premier flanc (12, 12').

3. Courroie à crans suivant la revendication 1 ou 2, **caractérisée en ce que** le moyen de fixation (14) est conçu comme étrier en acier rond avec une base (14.1) formant un élément d'appui, depuis laquelle font saillie perpendiculairement deux branches (14.3) pourvues d'un filetage (14.2), qui sont passées, lors du montage, dans les trous traversants (15) pratiqués dans la courroie crantée (2).
